Europäisches Patentamt

European Patent Office

Office européen des brevets

(19)

(11) Numéro de publication : **0 335 757 B1**

(12)

# FASCICULE DE BREVET EUROPEEN

(45) Date de publication du fascicule du brevet :
**20.05.92 Bulletin 92/21**

(51) Int. Cl.⁵ : **G01N 27/90**

(21) Numéro de dépôt : **89400504.0**

(22) Date de dépôt : **23.02.89**

(54) **Procédé de contrôle par courants de Foucault impulsionnels et dispositif de mise en oeuvre.**

(30) Priorité : **26.02.88 FR 8802377**

(43) Date de publication de la demande :
**04.10.89 Bulletin 89/40**

(45) Mention de la délivrance du brevet :
**20.05.92 Bulletin 92/21**

(84) Etats contractants désignés :
**DE ES GB IT SE**

(56) Documents cités :
**FR-A- 2 324 003**
**FR-A- 2 570 500**
**FR-A- 2 594 532**
**US-A- 3 229 197**
**US-A- 4 084 136**

(73) Titulaire : **COMMISSARIAT A L'ENERGIE
ATOMIQUE Etablissement de Caractère
Scientifique Technique et Industriel
31/33, rue de la Fédération
F-75015 Paris (FR)**

(72) Inventeur : **Champonnois, François
44 rue des Fossés St. Bernard
F-75005 Paris (FR)**
Inventeur : **David, Bernard
8 Clos de montyon
F-91190 Gif sur Yvette (FR)**
Inventeur : **Joffre, Francis
28 rue de Gometz
F-91440 Bures sur Yvette (FR)**

(74) Mandataire : **Mongrédien, André et al
c/o BREVATOME 25, rue de Ponthieu
F-75008 Paris (FR)**

## Description

La présente invention a pour objet un procédé de contrôle par courants de Foucault impulsionnels et un dispositif de mise en oeuvre. Le domaine d'application de l'invention est celui du contrôle non destructif de pièces métalliques, notamment de pièces épaisses et/ou ferromagnétiques.

Les dispositifs de contrôle par courants de Foucault utilisent le plus souvent des signaux d'excitation sinusoïdaux ayant une fréquence déterminée. On peut trouver une description de cette technique notamment dans le brevet des Etats-Unis d'Amérique US-A-3,229,198 délivré le 11 janvier 1966 à H.L. LIBBY et intitulé "Eddy current non destructive testing device for measuring multiple parameter variable of a metal sample".

Dans certains dispositifs perfectionnés, on utilise plusieurs signaux sinusoïdaux à des fréquences différentes, comme décrit dans le brevet français FR-A-2 324 003 intitulé "Procédé de contrôle non destructif par courants de Foucault et dispositif correspondant, utilisant une excitation multifréquence et permettant l'élimination de certains paramètres".

Dans une variante des courants multifréquence, on superpose N signaux rectangulaires de période sous-multiple d'une période T pour obtenir une suite récurrente d'impulsions rectangulaires de largeur T/N et de période de récurrence T. Cette superposition sert à exciter la sonde. L'analyse du signal récurrent de mesure s'effectue, comme dans les appareils multifréquence, en réutilisant les N signaux rectangulaires pour détecter les composantes de période sous-multiple de la période de récurrence.

L'utilisation de signaux rectangulaires au lieu de signaux sinusoïdaux facilite le traitement numérique du signal. Il est alors possible d'effectuer des combinaisons d'échantillons selon diverses transformations linéaires connues sous le nom de transformation de Walsh. Le résultat de ces transformations complexes est affiché et interprété.

Cette technique est décrite dans le brevet américain US-A-4 084 136 délivré à LIBBY et al.

Cependant, l'utilisation de signaux périodiques n'est pas toujours souhaitable. C'est le cas notamment lorsque la pièce à contrôler est épaisse et présente un caractère ferromagnétique. Dans ce cas en effet, la forte perméabilité magnétique conduit à un effet de peau important qui rend inaccessibles les zones profondes de la pièce. On préfère alors utiliser des signaux impulsionnels qui procurent une plus grande puisance instantanée, permettant de saturer le matériau ferromagnétique. La perméabilité se trouve alors fortement diminuée et la pénétration des courants améliorée.

Une telle technique est décrite notamment dans le brevet américain US-A-3 229 197. Elle utilise dans ce cas deux types d'impulsions, l'une courte l'autre longue. Ces deux types alternent de sorte que la sonde délivre, elle aussi, des impulsions alternativement longues et courtes. Par différence, on obtient un signal de mesure nul si la pièce est sans défaut. Tout défaut déséquilibre ce signal différence et révèle son existence.

La technique du contrôle non destructif par courants de Foucault impulsionnels qui se rapproche le plus de la présente invention est décrite dans l'article de G. WITTIG and H.M. THOMAS intitulé "Design of a Pulsed Eddy-Current Test Equipment with Digital Signal Analysis" publié dans le livre Eddy-Current Characterization of Materials and Structures, ASTM STP 722, George Birnbaum and George Free, Eds., American Society for Testing and Materials 1981, pp. 387-397, ainsi que dans les références citées dans cet article.

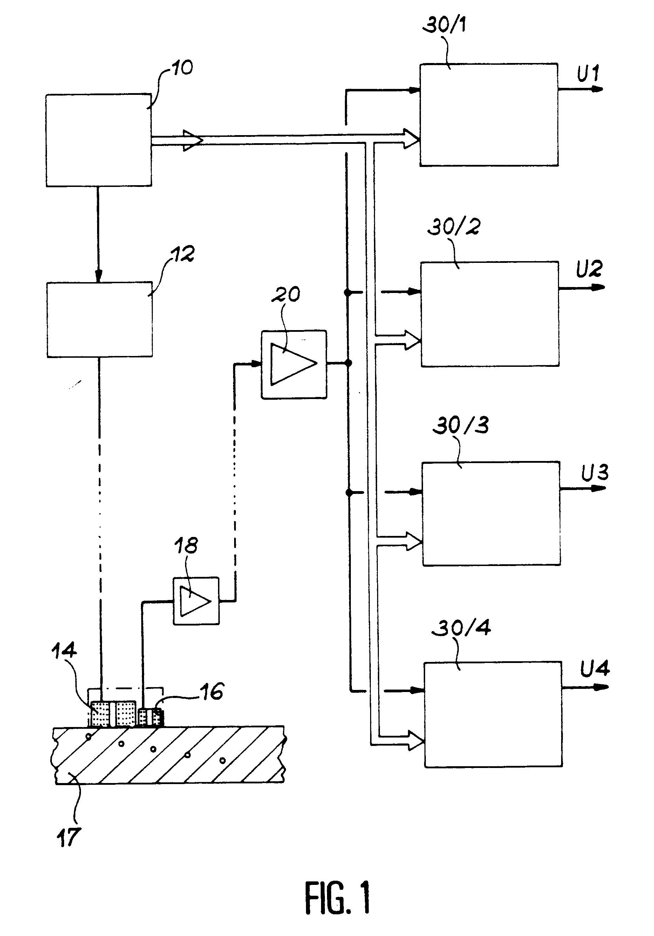

La figure 1 rappelle la structure d'un dispositif de l'art antérieur fonctionnant selon ce principe.

Le dispositif représenté comprend un oscillateur stable 10, fonctionnant par exemple à 1 MHz, un générateur d'impulsions 12, délivrant des impulsions de courant dont la durée dépend des valeurs de l'inductance et de la capacité du circuit et qui est de l'ordre de 5 à 75 µs. L'intensité peut être de l'ordre de la dizaine d'ampères. Une sonde comprend un enroulement d'excitation 14 et un enroulement de mesure 16. Cette sonde se déplace le long d'une pièce à contrôler 17, par des moyens non représentés. La tension prélevée aux bornes de l'enroulement 16 est appliquée à un préamplificateur à faible bruit 18, lequel est relié à un amplificateur 20.

Dans l'exemple représenté, le dispositif comprend en outre quatre voies 30/1, 30/2, 30/3, 30/4 dont la fonction est d'échantillonner le signal de mesure et de maintenir la valeur échantillonnée (fonction dite "sample-and-hold" en terminologie anglo-saxonne). Les tensions finalement délivrées par les quatre voies sont notées U1, U2, U3 et U4.

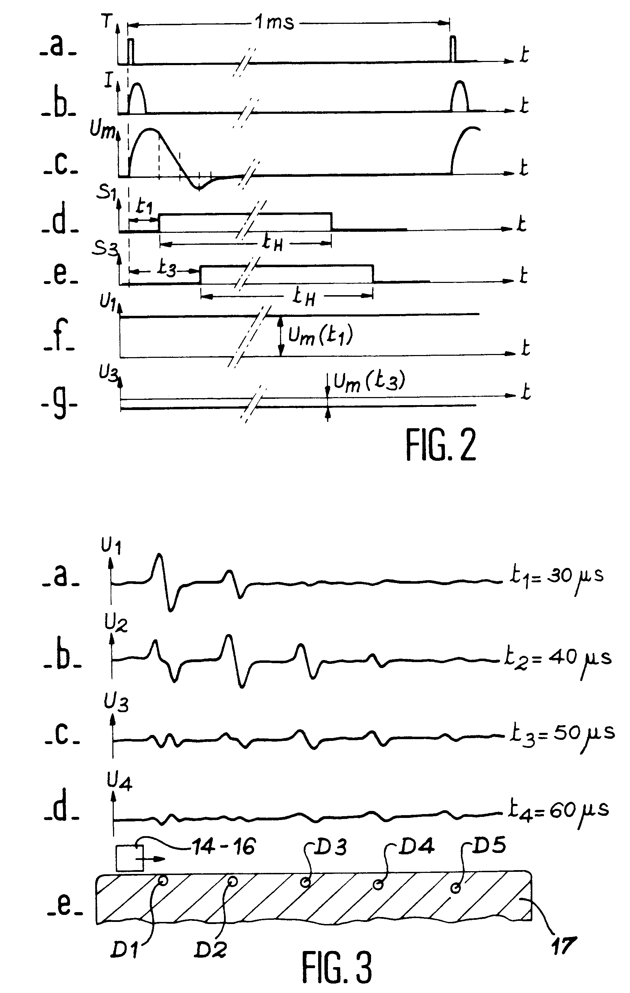

La figure 2 illustre le fonctionnement de ce dispositif :
– la ligne (a) représente les impulsions T délivrées par le circuit 10,
– la ligne (b) représente les impulsions I délivrées par le générateur 12 et appliquées sur l'enroulement d'excitation 14 de la sonde,
– la ligne (c) montre l'allure du signal Um recueilli aux bornes de l'enroulement de mesure 16 de la sonde,
– la ligne (d) montre le retard à l'échantillonnage t1 et la durée de maintien tH, propres à la première voie 30/1,
– le ligne (e) montre le retard à l'échantillonnage t3 et la durée de maintien tH propres à la troisième voie 30/3,
– la ligne (f) montre la tension U1 délivrée par la voie 30/1, tension qui caractérise en grandeur et en signe l'évolution de l'échantillon du signal de mesure pris à l'instant t1, soit Um(t1),
– la ligne (g) enfin, montre la tension U3 délivrée par la voie 30/3, tension qui caractérise en grandeur et en signe l'évolution de l'échantillon du signal de mesure pris à l'instant t3, soit Um(t3).

La continuité des signaux U1 et U3 est obtenue par un filtrage passe-bas, qui lisse la courbe échantillonnée.

Lorsque la sonde se déplace le long de la pièce à contrôler, chaque tension délivrée par les voies d'échantillonnage et de maintien varie en fonction de la qualité de la pièce, et ces variations permettent de contrôler cette qualité.

C'est ce qui est représenté sur la figure 3 où l'on voit quatre traces (a), (b), (c), (d) correspondant aux variations des quatre tensions U1, U2, U3, U4 délivrées par les quatre voies. Ces tensions correspondent à quatre instants d'échantillonnage différents définis par quatre retards t1, t2, t3, t4 comptés à partir de l'impulsion T de l'oscillateur. Sur la figure 3, ces retards sont respectivement de 30/40/50 et 60 µs.

La ligne (e) de cette même figure 3 montre la sonde 14-16 devant la pièce 17 supposée présenter cinq défauts D1 à D5, situés respectivement à une profondeur de 0,5/1,1/2,2/3,3 et 4,5 millimètres de la surface de la pièce.

Lorsque la sonde passe au-dessus d'un défaut, la tension échantillonnée commence par croître, puis passe par un maximum, décroît, s'annule, change de signe, passe par un minimum, puis croît à nouveau et finalement s'annule.

Bien que donnant satisfaction à certains égards, ces dispositifs présentent des inconvénients. En premier lieu, l'examen des courbes telles que celles de la figure 3 (ou telles que celles de la figure 2, ligne (c)) est malaisé et il est bien difficile à l'opérateur d'en tirer des informations précises sur les défauts de la pièce. La théorie des courants de Foucault est en effet si complexe dans le cas des pièces ferromagnétiques saturées (du fait de phénomènes non-linéaires) qu'il est illusoire d'en attendre un secours.

En second lieu, les dispositifs antérieurs ne permettent pas de s'affranchir de certains signaux apparaissant au voisinage de pièces soudées ou de plaques rapportées ou de toute autre variation inhérente à la géométrie ou à la structure de la pièce examinée (bruit de fond, transition, ...), signaux quine révèlent pas à proprement parler la présence d'un défaut, mais qui peuvent masquer des signaux de moindre amplitude traduisant, eux, l'existence d'un véritable défaut.

En dernier lieu, ces dispositifs présentent des défauts d'équilibrage qu'il est difficile de corriger dans la mesure où le fonctionnement est du type impulsionnel et implique des transitoires rapides. Dans le cas du contrôle par courants sinusoïdaux, on peut toujours engendrer un signal de correction ayant la fréquence du signal d'excitation, et ajuster la phase et l'amplitude de ce signal pour compenser le déséquilibre de la sonde. Mais, en fonctionnement impulsionnel, cette technique est inappropriée en raison du spectre étendu du signal à corriger. Le déséquilibre de la sonde n'est pas le même à chaque fréquence et le signal de correction ne peut se réduire à un signal sinusoïdal.

La présente invention a justement pour but de remédier à tous ces inconvénients.

A cette fin, l'invention a pour premier objet un procédé destiné à faciliter l'analyse des signaux échantillonnés. L'invention prévoit un procédé caractérisé par le fait que l'on représente, dans un plan d'affichage un point ayant une première coordonnée le long d'un premier axe, égale à une première amplitude échantillonnée-maintenue obtenue pour un retard d'échantillonnage court et une seconde coordonnée le long d'un second axe, égale à une seconde amplitude échantillonnée-maintenue obtenue pour un retard d'échantillonnage long. Ce point contient l'information sur l'état de la pièce située en regard de la sonde.

On observera qu'une seule impulsion suffit dans l'invention. Par comparaison, dans le procédé décrit dans US-A-4 084 136 cité plus haut, il faut nécessairement une suite récurrente d'impulsions rectangulaires pour obtenir une information. Par ailleurs la forme et la durée de toutes ces impulsions découlent nécessairement de la suite récurrente (par exemple la durée sera de T/8 si T est la période de récurrence). Dans l'invention on forme essentiellement une seule impulsion, dont la forme et la durée sont déterminées.

Naturellement, s'il s'agit de contrôler une zone étendue d'une pièce, on déplacera la sonde ou la pièce, et l'on réémettra une impulsion et ainsi de suite. Mais l'intervalle de temps entre les diverses impulsions émises n'influera en rien sur la forme et la durée de l'impulsion d'excitation.

En cas de déplacement et de répétition de l'impulsion d'excitation, le point affiché se déplacera si la sonde passe au-desssus d'un défaut. On pourra suivre la trace de ce point dans le plan.

L'amplitude et la phase de cette trace donnent les informations sur les défauts de la pièce le long de la zone explorée.

Dans un tel procédé, lorsqu'un capteur différentiel se déplace le long de la pièce à contrôler et passe au-dessus d'un défaut, le point affiché dessine une figure en forme de huit, pour des raisons qui apparaîtront mieux par la suite. Or cette forme est très simple à analyser.

Cette forme n'est d'ailleurs pas sans rappeler les courbes que l'on obtient dans la technique des courants sinusoïdaux évoquée plus haut. Il faut cependant souligner une différence substantielle entre ces deux techniques, qui rend cette similitude purement formelle. Dans la technique des courants sinusoïdaux, on représente la tension de mesure dans un plan d'impédance. Pour cela, on porte sur un axe la partie résistive de l'impédance de la sonde (en d'autres termes, la partie de la tension de mesure qui est en phase avec la tension d'excitation) et sur l'axe perpendiculaire la partie réactive de cette impédance (en d'autres termes la partie de la tension de mesure qui est en quadrature avec la tension d'excitation). Dans la présente invention, il n'est pas question de plan d'impédance, ni de composantes résistives ou réactives. Il s'agit d'un plan n'ayant aucune signification électrique particulière, mais présentant des propriétés inattendues en ce qui concerne l'exploitation des résultats. Ces propriétés tiennent à ce que l'un des deux échantillonnages s'effectue en début d'impulsion de mesure et l'autre à la fin (autrement dit le retard à l'échantillonnage est respectivement court et long).

Eventuellement, comme dans la technique des courants de Foucault sinusoïdaux, on effectue, avant de suivre la trace de l'extrémité du vecteur, une rotation du système d'axes permettant d'engendrer des nouvelles composantes ayant des propriétés que les deux signaux échantillonnés n'avaient pas, en particulier la projection du "bruit de fond" sur un axe. Par ailleurs, dans certains cas particuliers, l'usage d'axes de coordonnées non perpendiculaires permet de mettre en évidence des caractères des signaux plus significatifs que ceux obtenus par une représentation selon deux axes perpendiculaires.

Selon une variante avantageuse du procédé de l'invention :
– on échantillonne chaque impulsion de mesure en plusieurs couples d'instants pour obtenir plusieurs couples d'amplitudes échantillonnées-maintenues,
– on représente chacun de ces couples dans autant de plans pour obtenir autant de traces.

Ce traitement en plusieurs plans permet, par la comparaison des différentes réponses dans les différents plans, de valider l'interprétation : il doit y avoir corrélation entre les interprétations basées sur des différents plans, sinon une erreur dans les hypothèses est détectée (par exemple existence d'un défaut multiple alors que les lois d'interprétation supposent qu'il n'y a qu'un seul défaut vu à la fois).

Par ailleurs, ce traitement en plusieurs plans permet de s'affranchir des inconvénients mentionnés plus haut quant à l'existence de paramètres indésirables. A cette fin, l'invention prévoit en outre un traitement d'élimination d'un paramètre indésirable consistant à modifier l'amplitude et/ou la phase d'une première trace correspondant à un premier couple d'amplitudes et/ou à modifier l'amplitude et/ou la phase d'une seconde trace correspondant à un second couple d'amplitudes pour obtenir deux traces analogues en phase et en amplitude dans une zone correspondant au paramètre indésirable et à soustraire les amplitudes modifiées du premier couple respectivement des amplitudes modifiées du second couple, pour obtenir de nouvelles composantes et une nouvelle trace débarrassée du paramètre indésirable.

Un autre objet de l'invention est un procédé tel qu'il vient d'être défini, dans lequel on effectue en outre une opération d'équilibrage. Pour cela on enregistre une fois pour toutes l'impulsion de mesure que la sonde délivre lorsqu'elle se trouve en regard d'une zone réputée sans défaut, cette impulsion constituant une impulsion de référence, et on restitue cette impulsion de référence en synchronisme avec l'impulsion de mesure courante, obtenue lorsque la sonde est en regard d'une zone à contrôler et l'on soustrait de l'impulsion de mesure courante l'impulsion de référence ainsi restituée.

De préférence, on enregistre de manière numérique l'impulsion de référence par conversion analogique-numérique puis écriture dans une mémoire, et on restitue l'impulsion de référence par lecture de ladite mémoire et conversion numérique-analogique.

Un autre objet de l'invention est un procédé tel que défini plus haut, dans lequel on effectue une opération de compensation de l'échantillon prélevé. Pour cela :
– on enregistre, une fois pour toutes, l'amplitude échantillonnée-maintenue obtenue lorsque la sonde est en regard d'une zone réputée sans défaut, cette amplitude constituant une amplitude de compensation,
– on soustrait du signal de mesure obtenu lorsque la sonde est devant une zone à contrôler l'amplitude de compensation enregistrée.

Un autre objet de l'invention est un dispositif de contrôle par courants de Foucault impulsionnels, qui met en oeuvre le procédé qui vient d'être défini.

Dans sa structure la plus générale, le dispositif est caractérisé par le fait qu'il comprend des moyens d'affichage dans un plan d'un point ayant une première coordonnée sur un premier axe égale à une première amplitude échantillonnée-maintenue obtenue avec un retard à l'échantillonnage court et une seconde coordonnée le long d'un second axe égale à une seconde amplitude échantillonnée-maintenue obtenue avec un retard à l'échantillonnage long.

De préférence, la sonde et la pièce sont en déplacement relatif et le générateur réémet périodiquement l'impulsion d'excitation, ce qui permet d'obtenir une courbe représentant les variations de position du point dans le plan d'affichage.

De préférence, le moyen d'affichage est constitué par un oscilloscope à rayons cathodiques dont l'écran constitue le plan de représentation, avec un premier axe horizontal et un second axe vertical.

Dans des modes particuliers de réalisation, ce dispositif comprend des moyens pour éliminer des paramètres indésirables et/ou des moyens d'équilibrage de la sonde et/ou des moyens de compensation.

De toute façon, les caractéristiques de l'invention apparaîtront mieux à la lumière de la description qui va suivre. Cette description se rapporte à des exemples de réalisation et elle se réfère à des dessins annexés. Sur ces dessins, qui font suite aux figures 1 à 3 déjà décrites :

– la figure 4 illustre le principe de l'invention,

– la figure 5 montre une trace obtenue selon l'invention lorsque la sonde se déplace en regard d'un défaut,

– la figure 6 rappelle l'allure de deux signaux obtenus conformément à l'art antérieur dans le cas de trois défauts situés à des profondeurs différentes,

– la figure 7 montre l'allure des courbes correspondant au cas précédent mais obtenues selon l'invention,

– la figure 8 illustre le principe de la combinaison des résultats obtenus dans deux plans de représentation différents pour éliminer un paramètre indésirable,

– la figure 9 illustre un exemple de moyens à mettre en oeuvre pour effectuer la combinaison précédente,

– la figure 10 montre l'allure d'un signal délivré par une sonde en l'absence de défaut de la pièce examinée,

– la figure 11 montre des moyens d'équilibrage du signal,

– la figure 12 montre des moyens de compensation de la tension échantillonnée,

– la figure 13 illustre un montage à double échantillonneur-bloqueur.

Dans la description qui va suivre, on supposera que la sonde se déplace par rapport à une pièce fixe. Il va sans dire qu'il serait parfaitement équivalent de maintenir la sonde fixe et de déplacer la pièce à contrôler. La portée de l'invention ne saurait donc être limitée à cet égard.

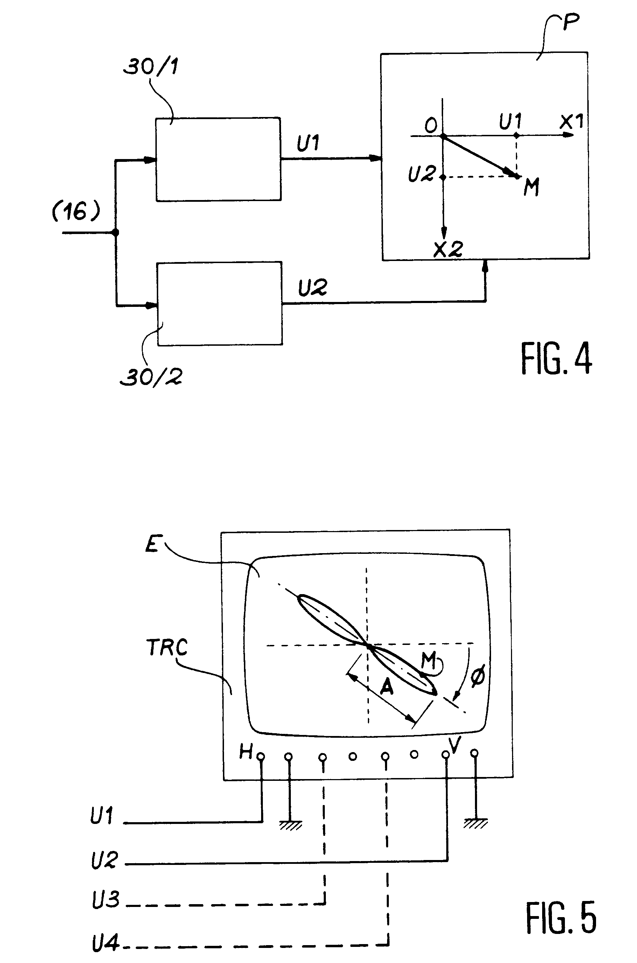

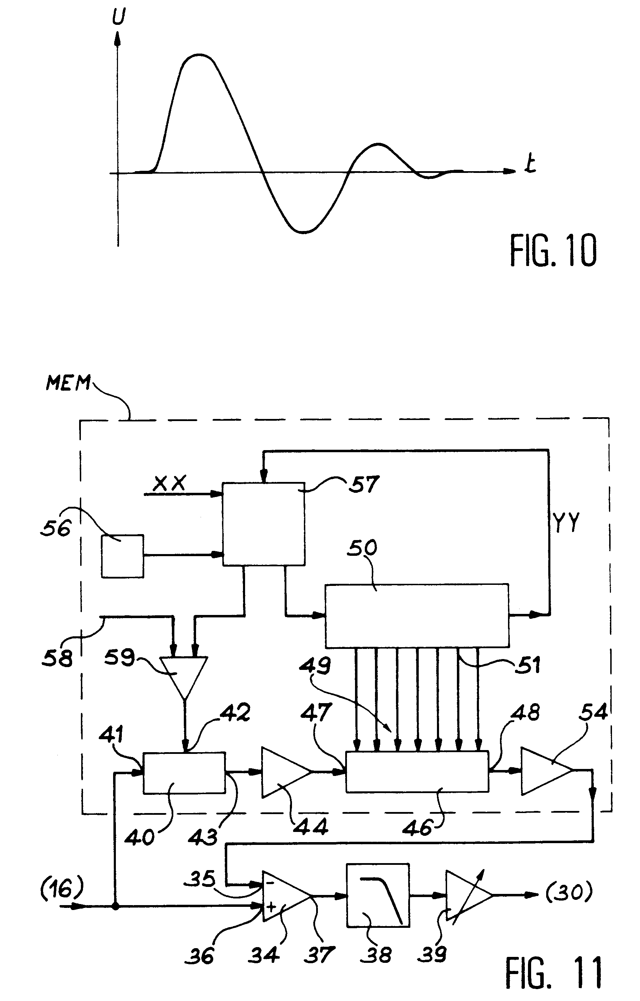

La figure 4 illustre le principe de la représentation et de l'exploitation des signaux selon l'invention. Deux voies 30/1 et 30/2 ont leur entrée reliée à l'enroulement de mesure 16 de la sonde et ont leur sortie délivrant un signal correspondant à un échantillonnage du signal de mesure. Les instants d'échantillonnage sont définis respectivement par un retard court et un retard long (sur la figure 2, déjà décrite, ces retards sont notés t1 et t3, t1 étant court et t3 long). Les notions de "court" et de "long" sont très relatives et dépendent à la fois de la forme de l'impulsion de courant et de la profondeur à laquelle on souhaite détecter des défauts. Sans que cela constitue une règle générale, "court" peut correspondre à un point de la première alternance du signal représenté en figure 10, "long" se rapporter à une alternance ultérieure.

Les tensions U1 et U2 sont représentées dans un plan P défini par deux axes OX1, OX2, le signal U1 étant porté sur l'axe OX1 et le signal U2 sur l'axe OX2.

On définit ainsi un point M dont les coordonnées sur les axes OX1 et OX2 sont les grandeurs U1 et U2 ou, ce qui revient au même, un vecteur $\overrightarrow{OM}$ dont les composantes sont $\overrightarrow{OU1}$ et $\overrightarrow{OU2}$.

En pratique, le plan P est celui d'un enregistreur ou l'écran d'un oscilloscope. Ce dernier cas est illustré sur la figure 5 où l'écran est référencé E. Un tube à rayons cathodiques TRC reçoit sur une borne H, reliée aux plaques de déviation horizontale, la tension U1 et sur une borne V, reliée aux plaques de déviation verticale, la tension U2.

Lorsque la sonde se déplace le long de la pièce à contrôler, les tensions U1 et U2 restent constantes si la pièce est sans défaut et le point M demeure fixe dans le plan. Lorsque la sonde balaie une zone défectueuse, le point M(U1, U2) se déplace sur l'écran E où il trace une figure en forme de huit avec deux lobes pratiquement symétriques si le capteur utilisé est un capteur différentiel. On peut définir une amplitude A et une phase ∅ pour cette figure. L'amplitude traduit la "taille" du huit et la phase l'orientation de l'ensemble par rapport à l'axe horizontal.

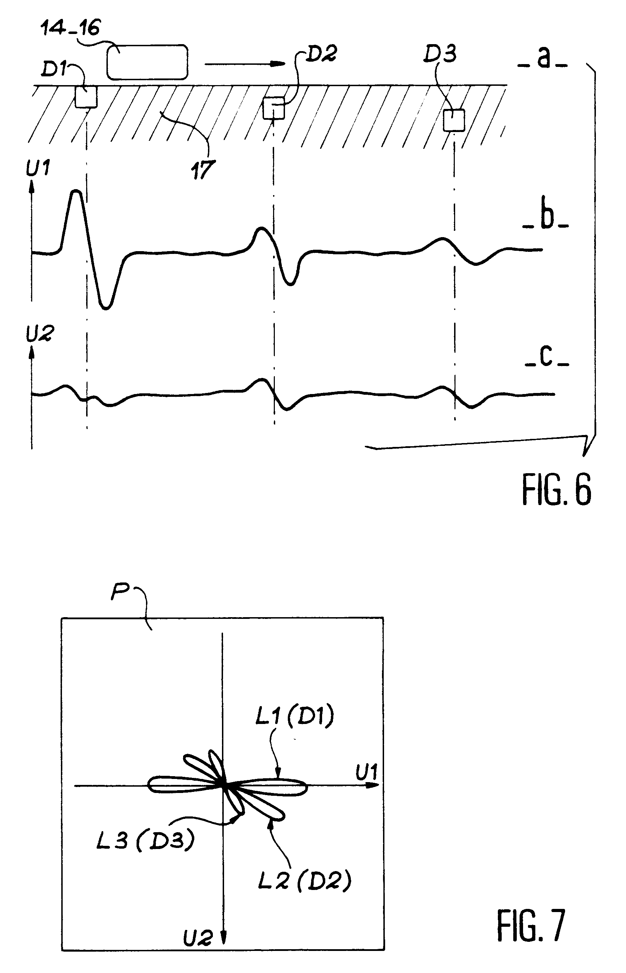

La raison pour laquelle on obtient une figure en forme de huit, résultat qui n'est pas sans surprendre, compte tenu du fait que les composantes utilisées n'ont aucun rapport avec des composantes résistive et réactive telles qu'on les rencontre dans les techniques usuelles à excitation sinusoïdale, peut être expliquée à l'aide des figures 6 et 7.

Sur la figure 6, on voit une sonde 14-16 se déplaçant le long d'une pièce 17 affectée de trois défauts : un défaut D1 situé près de la surface, un défaut D2 plus profond et un défaut D3 profond.

Lorsque la sonde se déplace au-dessus de ces défauts, la tension U1, caractérisant l'échantillon pris avec un retard court, présente l'allure de la ligne (b). La tension U2, caractérisant l'échantillon pris avec un retard long, présente l'allure de la figure (c). Ces courbes sont conformes à l'art antérieur tel qu'il a été illustré sur la figure 2. Mais, dans un plan de représentation conforme à l'invention, la trace obtenue montre trois lobes L1, L2, L3 de phases et d'amplitudes différentes (figure 7). Un lobe L1 est couché sur l'axe horizontal. Il correspond au défaut D1. En effet, ce défaut étant proche de la surface, il perturbe avant tout le début de l'impulsion de courant et très peu la fin de celle-ci. C'est donc la composante "horizontale" U1 qui est prépondérante, la composante "verticale" U2 restant faible. Le lobe L1 présente donc une phase faible.

La situation s'inverse pour le défaut D3, qui est profond. C'est la fin de l'impulsion de courant qui est perturbée dans ce cas, le début de celle-ci n'étant que peu affecté. C'est donc la composante verticale U2 qui est prépondérante. Le lobe L3 présente donc une phase proche de 90°.

Pour le défaut D2, la situation est intermédiaire. Le début et la fin de l'impulsion de courant sont perturbés par le défaut et les composantes U1 et U2 sont du même ordre : le lobe L2 est incliné avec une phase proche de 45°.

Ainsi, la lecture de l'information de profondeur du défaut est-elle immédiate selon l'invention : il suffit d'observer la phase de la figure obtenue. Quant à l'ampleur du défaut, elle apparaît, elle aussi, très clairement à travers l'amplitude des lobes.

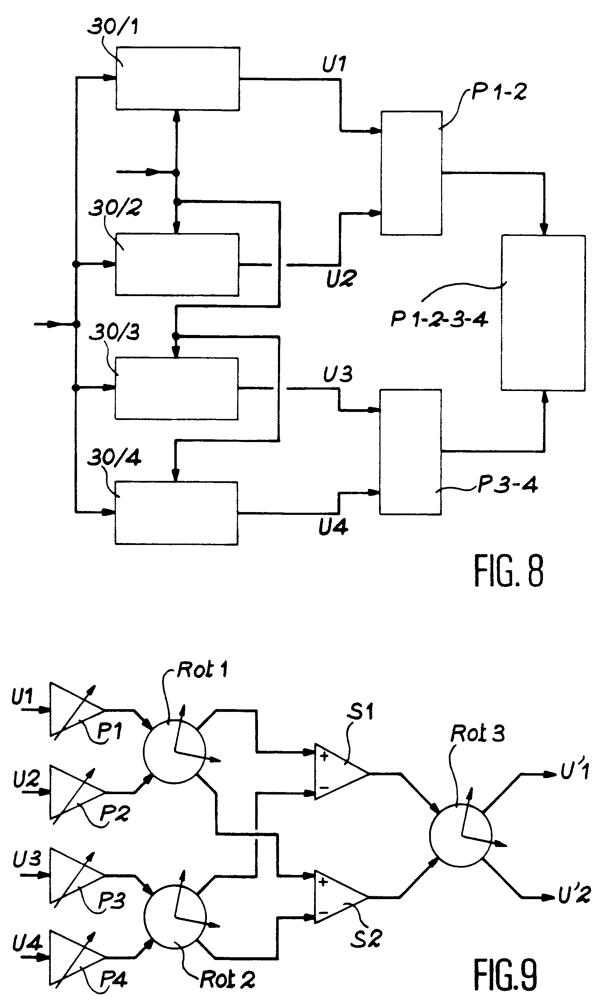

En plus de cet avantage lié à la grande lisibilité des résultats obtenus, l'invention en présente un autre. En effet, comme il se trouve, de manière fortuite, que l'allure de la trace représentée selon l'invention est analogue à celle que l'on obtient en contrôle par courants de Foucault sinusoïdaux, il est possible de mettre en oeuvre la technique d'élimination de paramètres indésirables connue pour ce dernier type de contrôle. Cette technique est décrite dans le brevet français FR-A-2 324 003 déjà cité. C'est ce qui est représenté schématiquement sur la figure 8. On y a représenté un plan P1-2 d'exploitation des deux signaux U1 et U2 délivrés par deux échantillonneurs-bloqueurs 30/1 et 30/2 et un plan P3-4 d'exploitation des deux signaux U3 et U4 délivés par deux échantillonneurs-bloqueurs 30/3 et 30/4. Les grandeurs représentées dans les plans P1-2 et P3-4 sont combinées en amplitude et en phase pour donner une nouvelle représentation dans un plan P1-2-3-4. Dans ce plan, de nouvelles grandeurs U'1 et U'2 sont obtenues, qui sont débarrassées d'un paramètre indésirable.

Les moyens à mettre en oeuvre pour effectuer un tel traitement sur les tensions U1, U2, U3 et U4 sont illustrés sur la figure 9.

U1 et U2 sont pondérés par un facteur k1, k2 au moyen de pondérateurs P1, P2 (qui sont en pratique des atténuateurs réglables). Les tensions k1U1 et k2U2 sont transformées par un rotateur Rot1 par une opération équivalente à une rotation de phase Q1,2 (en pratique on forme des quantités :

$$k1U1cos\varnothing1,2 + k2U2sin\varnothing1,2 \text{ et } k1U1sin\varnothing1,2 - k2U2cos\varnothing1,2.$$

Des traitements similaires sont effectués sur un autre couple de tensions U3 et U4, au moyen de pondérateurs P3, P4 et d'un rotateur Rot2.

Les composantes modifiées sont soustraites deux à deux dans deux sommateurs différentiels S1 et S2.

Un ultime rotateur Rot3 permet de faire tourner dans son plan, si besoin est, la figure finalement obtenue.

Naturellement, dans certains cas, des coefficients de pondération pourront être pris égaux à l'unité et certaines rotations pourront être évitées.

On peut ainsi agir sur l'amplitude d'une trace (en laissant sa phase inchangée) et sur la phase de l'autre (en laissant son amplitude inchangée), ou agir uniquement sur une trace (en amplitude et en phase) en laissant l'autre inchangée.

En plus des avantages liés au traitement particulier qui vient d'être décrit, l'invention en procure d'autres grâce à des dispositions concernant l'équilibrage et la compensation du signal de mesure.

Comme exposé plus haut, la difficulté d'équilibrage d'un dispositif à courants pulsés tient à la largeur du spectre des signaux en cause.

La figure 10 montre par exemple l'allure du signal délivré par une sonde lorsque celle-ci est en regard d'une zone sans défaut. Un tel signal peut s'observer sur l'écran d'un oscilloscope. Une sonde délivrant un tel signal, alors qu'aucun défaut n'affecte la pièce contrôlée, est soit une sonde de mesure absolue, soit une sonde différentielle dont la symétrie de construction n'est pas suffisante, ce qui est quasiment toujours le cas.

Le dispositif de l'invention comprend donc avantageusement des moyens d'équilibrage dont un mode de réalisation est illustré sur la figure 11. Sur cette figure, on voit un dispositif de mémorisation MEM, apte à recevoir le signal de mesure délivré par la sonde lorsque celle-ci se trouve devant une zone réputée sans défaut, un additionneur 34 à deux entrées, l'une négative 35 apte à être reliée à la sortie du dispositif de mémorisation, l'autre positive 36 reliée à la sonde lorsque celle-ci se trouve en regard d'une zone à contrôler. L'additionneur 34 est relié à un filtre passe-bas 38 suivi d'un amplificateur à gain variable 39.

Dans le mode de réalisation illustré, le moyen de mémorisation MEM comprend :

– un échantillonneur-bloqueur 40 ayant une entrée de signal 41 reliée à la sonde et une entrée de commande 42 recevant un signal de commande d'équilibrage et une sortie 43,
– un convertisseur analogique-numérique 44 relié à la sortie 43 de l'échantillonneur,
– une mémoire 46 ayant une entrée et une sortie de données 47, 48 et une entrée d'adressage 49, l'entrée de données 47 étant reliée au convertisseur analogique-numérique 44,
– un compteur 50 ayant une sortie numérique 51 reliée à l'entrée d'adressage 49 de la mémoire 46,
– un convertisseur numérique-analogique 54 relié à la sortie de données 48 de la mémoire 46,
– une horloge 56 commandant l'échantillonneur 40 et le compteur 50,
– un circuit 57 disposé entre l'horloge 56 et le compteur 50 pour que le signal restitué reçu par l'entrée négative 35 de l'additionneur 34 soit synchrone de l'impulsion de mesure courante reçue par l'entrée positive 36 de l'additionneur 34. Le départ du comptage est provoqué par la commande XX, et l'arrêt et remise à zéro par la sortie YY du compteur 50, lorsque toute la forme d'onde contenue dans la mémoire 46 a été balayée.

L'horloge 56 fonctionne par exemple à 10 MHz. La commande d'équilibrage peut être obtenue par une connexion 58 reliée à une entrée d'un amplificateur 59 dont une autre entrée reçoit des impulsions d'horloge synchronisées par le circuit 57 et dont la sortie est reliée à l'entrée de commande 42 de l'échantillonneur 40.

La mémoire 46 est du type mémoire vive ("RAM") et peut avoir une capacité de 1 Koctet. Le compteur 50 est alors un compteur de contenu maximum égal à 1000.

L'échantillonneur-bloqueur 40 est rapide, avec un temps de prise d'échantillon de l'ordre de 50 ns. Le convertisseur 44 est également rapide (20 à 30 ns).

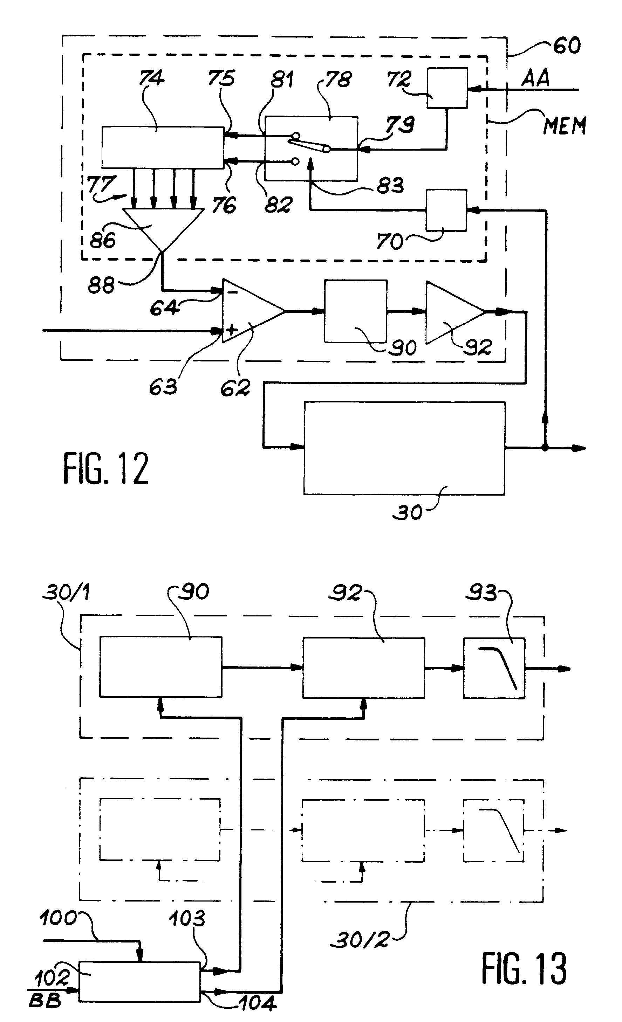

Lorsque l'équilibrage parfait de la courbe de mesure n'est pas nécessaire, on peut se contenter de corriger le signal de mesure en un point particulier, qui est le point d'échantillonnage, ou en quelques points particuliers. Dans ce cas, les moyens de la figure 11 sont inutilement complexes et l'on peut se contenter des moyens de la figure 12.

Sur cette figure est représenté un circuit de compensation 60 qui est placé avant chaque voie 30 d'échantillonnage et maintien (30/1...) ; ce circuit 60 comprend un additionneur 62 à deux entrées, l'une positive 63, l'autre négative 64, un moyen MEM de mémorisation d'une tension relié à l'entrée négative 64 de l'additionneur 62, cette tension étant telle que, lorsque la sonde est située en regard d'une zone réputée sans défaut, la tension de sortie de la voie 30 soit nulle.

Selon la variante illustrée, le moyen MEM de mémorisation comprend :
– un détecteur de signe 70 relié à la sortie de la voie 30,
– une horloge 72, dont le fonctionnement est activé par une commande d'équilibrage AA,
– un compteur-décompteur 74 ayant une entrée de comptage 75 et une entrée de décomptage 76, ainsi qu'une sortie de données 77,
– un commutateur 78 ayant une entrée 79 reliée à l'horloge 72 et deux sorties 81, 82 reliées aux entrées 75, 76 du compteur 74 et une entrée de commande 83 reliée au détecteur de signe 70,
– un convertisseur numérique-analogique 86 ayant une entrée reliée à la sortie de données 77 du compteur 74 et une sortie 88 reliée à l'entrée négative 64 du comparateur 62.

Le dispositif se complète par un écrêteur non saturable 90 et un amplificateur 92 ; l'écrêteur limite l'excursion du signal afin de permettre le fonctionnement correct de l'amplificateur 92.

Le fonctionnement de ce circuit est le suivant, lors de la phase d'équilibrage provoquée par la commande AA.

Tant que le signal de sortie de la voie n'est pas nul, le compteur-décompteur 74 voit son contenu augmenter ou diminuer ; le signal de correction appliqué sur l'entrée négative 64 de l'additionneur est modifié dans le même sens, ce qui a pour effet de ramener la tension de sortie vers zéro. Lorsque cet état est obtenu, l'échantillon délivré par la voie 30, pour l'instant d'échantillonnage propre à cette voie, est nul, ce qui correspond bien à un dispositif compensé puisque la sonde est supposée être située en regard d'une zone sans défaut.

Lorsque la commande AA est arrêtée, le contenu du compteur 74 est conservé pour toutes les mesures ultérieures. Ainsi, le signal délivré en 30 reflète-t-il vraiment l'influence d'un défaut au droit de la sonde.

Le dispositif de la figure 12 doit équiper chacune des voies de traitement, chaque temps de retard conduisant à une valeur différente de tension à compenser. Un tel cicuit de compensation est économique et il permet une amélioration du rapport signal sur bruit en sortie de l'appareil, car en enlevant la composante continue du signal délivré en 62, il autorise une amplification en 92, avant d'effectuer l'échantillonnage-maintien en 30. Mais l'amélioration n'est pas aussi grande qu'avec la variante à équilibrage de la totalité de la courbe, car la dérivée du signal n'est pas annulée comme c'était le cas en 37.

Dans la technique du contrôle non destructif par courants de Foucault impulsionnels, on ne s'intéresse en fait qu'à des points précis de la courbe représentative du signal de mesure. Ces points sont repérés après observation des modifications de la totalité de la courbe.

La théorie établit que les courbes représentatives des signaux amplitude-temps tels que le signal de la figure 10, passent par des points fixes lorsque la distance capteur-pièce varie. Il est intéressant de s'y placer.

Un étage échantillonneur tel que 30/1 sur la figure 1 prélève donc la valeur prise pour un retard précis après le déclenchement de l'impulsion de courant. La recherche d'un point fixe nécessite un réglage quasi-continu de ce retard, ce qui implique une circuiterie de retard analogique. C'est un point délicat de cette technique car une grande stabilité est nécessaire. Un retard numérique par comptage d'impulsions nécessiterait une horloge d'une rapidité telle que les circuits deviendraient très complexes et leur fonctionnement risquerait de perturber la chaîne analogique. L'échantillonneur lui-même doit répondre de manière très précise à la commande ; il doit donc être très rapide.

Par ailleurs, la récurrence de la mesure est telle que la valeur mémorisée doit être conservée un temps assez long vis-à-vis de la rapidité de l'échantillonneur. Cette propriété nécessiterait donc plutôt un échantillonnage lent.

Cette difficulté est levée dans l'invention grâce à un système à double échantillonnage illustré sur la figure 13.

Chaque voie d'échantillonnage et de maintien 30/1... comprend un premier échantillonneur-bloqueur 90 apte à effectuer rapidement (en 50 ns ou moins) l'échantillonnage mais seulement apte à maintenir l'échantillon pendant une durée limitée, et un second échantillonneur-bloqueur 92 relié au premier et apte à ré-échantillonner lentement, avec un retard fixe, le signal délivré par le premier, mais apte à maintenir ce signal ré-échantillonné pendant une durée longue, correspondant à la période des impulsions d'excitation. Cette dernière peut monter à 10 ms lorsque la fréquence de récurrence tombe à 100 Hz.

Une impulsion de commande de l'échantillonnage BB provenant du générateur 10 est appliquée à un circuit 102 qui la retarde proportionnellement à une commande analogique 100, et délivre sur une sortie 103 une impulsion de commande de l'échantillonneur-bloqueur 90 et sur une sortie 104 une impulsion retardée adressée à l'échantillonneur-bloqueur 92, retardée d'une valeur fixe par rapport à celle émise en 103.

On obtient ainsi une courbe échantillonnée en vraies "marches d'escalier", donc sans aucun bruit lorsque la dérivée moyenne est nulle. Un filtre passe-bas 93 permet, le cas échéant, de lisser les transitoires conduisant à des marches d'escalier gênantes.

## Revendications

1. Procédé de contrôle de pièces par courants de Foucault impulsionnels, dans lequel : on alimente une sonde (14,16) disposée à proximité de la pièce (17) à contrôler par au moins une impulsion d'excitation ayant une forme et une durée déterminées, on prélève sur la sonde (14,16) une impulsion de mesure correspondante, on échantillonne cette impulsion de mesure et on maintient l'amplitude des échantillons obtenus, ce procédé étant caractérisé par le fait que : on prend un premier échantillon de l'impulsion de mesure à un premier instant présentant un retard court par rapport au début de l'impulsion et on maintient ce premier échantillon, on prend un second échantillon de l'impulsion de mesure à un second instant présentant un retard long par rapport au début de l'impulsion et on maintient ce second échantillon, on affiche, sur un moyen d'affichage plan, un point ayant une première coordonnée sur un premier axe (OX1) du plan égale à l'amplitude du premier échantillon maintenu et ayant une seconde coordonnée sur un second axe (OX2) du plan égale à l'amplitude du second échantillon maintenu, la position de ce point révélant l'état de la pièce.

2. Procédé selon la revendication 1, caractérisé par le fait qu'on déplace l'une par rapport à l'autre la sonde (14,16) et la pièce (17), on réémet l'impulsion d'excitation, on affiche pour chaque impulsion le point correspondant, l'ensemble des points obtenus dessinant une trace dont l'amplitude et la phase donnent une image de la pièce le long de la zone de déplacement.

3. Procédé selon des revendications 1 et 2, caractérisé par le fait qu'il comprend les opérations suivantes : on échantillonne chaque impulsion de mesure en plusieurs couples d'instants respectivement à retards court et long, pour obtenir plusieurs couples d'amplitudes échantillonnées-maintenues, on représente chacun de ces couples par un point pour obtenir autant de points et autant de traces.

4. Procédé selon la revendication 3, caractérisé par le fait qu'il comprend en outre un traitement d'élimination d'un paramètre indésirable, ce traitement consistant à modifier l'amplitude et/ou la phase d'une première trace correspondant à un premier couple d'amplitudes et/ou à modifier l'amplitude et/ou la phase d'une seconde trace correspondant à un second couple d'amplitudes pour obtenir deux traces analogues en phase et en amplitude dans une zone correspondant au paramètre indésirable et l'on soustrait les amplitudes modifiées du premier couple respectivement des amplitudes modifiées du second couple, pour obtenir une nouvelle trace débarrassée du paramètre indésirable.

5. Procédé selon la revendication 1, caractérisé par le fait que l'opération d'échantillonnage-maintien s'effectue sur une impulsion préalablement équilibrée obtenue par les opérations d'équilibrage suivantes : on enregistre une fois pour toutes, l'impulsion de mesure que la sonde (14,16) délivre lorsqu'elle se trouve en regard d'une zone réputée sans défaut cette impulsion constituant une impulsion de référence et on restitue cette impulsion de référence de manière synchrone avec l'impulsion de mesure courante obtenue lorsque la sonde (14,16) est en regard d'une zone à contrôler et on soustrait de l'impulsion de mesure courante l'impulsion de référence ainsi restituée.

6. Procédé selon la revendication 5, caractérisé par le fait que l'on enregistre de manière numérique l'impulsion de référence par conversion analogique-numérique puis écriture dans une mémoire (46), et on restitue l'impulsion de référence par lecture de ladite mémoire (46) et conversion numérique-analogique.

7. Procédé selon la revendication 1, caractérisé par le fait que l'on effectue l'opération de mesure des variations des amplitudes échantillonnées-maintenues sur un signal de mesure compensé obtenu par des opérations de compensation suivantes : on enregistre, une fois pour toutes, l'amplitude échantillonnée-maintenue obtenue lorsque la sonde (14,16) est en regard d'une zone réputée sans défaut, cette amplitude constituant un signal de compensation, on soustrait du signal de mesure courant obtenu lorsque la sonde est devant une zone à contrôler le signal de compensation.

8. Procédé selon la revendication 7, caractérisé par le fait que l'opération d'enregistrement du signal de compensation s'effectue de manière numérique et comprend les opérations suivantes : on échantillonne le signal de mesure lorsque la sonde (14,16) est située en regard d'une zone réputée dépourvue de défaut, on détecte le signe de l'échantillon obtenu, on commande le comptage ou le décomptage d'impulsions d'horloge dans un compteur selon ledit signe, on convertit en analogique le résultat du comptage, on soustrait du signal de mesure le signal analogique converti, on arrête le comptage-décomptage lorsque le signal obtenu après soustraction est nul, le résultat final du comptage obtenu constituant la valeur numérique enregistrée du signal de compensation.

9. Dispositif de contrôle par courants de Foucault impulsionnels mettant en oeuvre le procédé selon la revendication 1, ce dispositif comprenant : une sonde (14, 16) disposée en regard d'une pièce à contrôler (17), un générateur (12) apte à émettre au moins une impulsion de forme et de durée déterminées, cette impulsion étant appliquée à la sonde (14, 16), au moins deux voies d'échantillonnage-maintien (30/1, 30/2) ayant une entrée reliée à la sonde (16), ces voies étant aptes à échantillonner une impulsion de mesure en des instants différents repérés par un retard compté à partir du début de l'impulsion de mesure délivrée par la sonde (14,16) et à maintenir l'amplitude échantillonnée, ce dispositif étant caractérisé par le fait qu'il comprend un moyen d'affichage d'un point ayant pour première coordonnée sur un premier axe (OX1) l'une des amplitudes échantillonnées-maintenues (U1) obtenue avec un retard à l'échantillonnage court (t1) et comme seconde coordonnée le long d'un second axe (OX2) une seconde amplitude (U2) échantillonnée-maintenue obtenue avec un retard à l'échantillonnage long (t2).

10. Dispositif selon la revendication 9, caractérisé par le fait qu'il comprend en outre des moyens pour déplacer la sonde (14,16) et la pièce (17) l'une par rapport à l'autre, le générateur (12) émettant alors une suite d'impulsions récurrentes ayant une période de récurrence déterminée par la vitesse de déplacement, le point affiché décrivant alors une trace dans le plan d'affichage, l'amplitude (A) et la phase (∅) de cette trace donnant des informations sur les défauts de la pièce (17) le long de la zone de déplacement.

11. Dispositif selon la revendication 10, caractérisé par le fait qu'il comprend des pondérateurs (P1, P2) et/ou un rotateur (Rot1) pour modifier l'amplitude et/ou la phase d'une première trace correspondant à un premier couple d'amplitudes échantillonnées-maintenues (U1, U2) et des pondérateurs (P3, P4) et/ou un rotateur (Rot2) pour modifier l'amplitude et/ou la phase d'une seconde trace correspondant à un second couple d'amplitudes échantillonnées-maintenues (U3, U4), pour obtenir deux traces analogues en amplitude et en phase relativement à un paramètre indésirable, et des soustracteurs (S1, S2) pour soustraire deux à deux les composantes des deux vecteurs dont les composantes ont été ainsi modifiées pour obtenir une nouvelle trace débarrassée du paramètre indésirable.

12. Dispositif selon la revendication 9, caractérisé par le fait qu'il comprend en outre des moyens d'équilibrage comprenant un dispositif d'enregistrement du signal de mesure délivré par la sonde (14,16) lorsque celle-ci se trouve devant une zone réputée sans défaut, un additionneur (34) à deux entrées, l'une négative (35) apte à être reliée à la sortie du dispositif d'enregistrement, l'autre positive (36) reliée à la sonde (14,16) lorsque celle-ci se trouve en regard d'une zone à contrôler et un moyen pour commander le dispositif d'enregistrement en synchronisme avec l'impulsion de mesure courante.

13. Dispositif selon la revendication 12, caractérisé par le fait que le dispositif d'enregistrement comprend : un échantillonnneur (40) ayant une entrée de signal (41) reliée à la sonde et une entrée de commande (42) recevant un signal de commande d'équilibrage et une sortie (43), un convertisseur analogique-numérique (44) relié à la sortie (43) de l'échantillonneur, une mémoire (46) ayant une entrée et une sortie de données (47, 48) et une entrée d'adressage (49), l'entrée de données (47) étant reliée au convertisseur analogique-numérique (44), un compteur (50) ayant une sortie numérique (51) reliée à l'entrée d'adressage (49) de la mémoire (46), un convertisseur numérique-analogique (54) relié à la sortie de données (48) de la mémoire (46), une horloge (56) commandant l'échantillonneur (40) et le compteur (50), un circuit (57) disposé entre l'horloge (56) et le compteur (50) pour que le signal restitué reçu par l'entrée négative (35) de l'additionneur (34) soit synchrone de l'impulsion de mesure courante reçue par l'entrée positive (36) de l'additionneur (34).

14. Dispositif selon la revendication 9, caractérisé par le fait qu'il comprend un circuit de compensation (60) placé avant chaque voie (30) d'échantillonnage et maintien (30/1...), ce circuit (60) comprenant un additionneur (62) à deux entrées, l'une positive (63), l'autre négative (64), un moyen MEM de mémorisation d'une tension relié à l'entrée négative (64) de l'additionneur (62), cette tension étant telle que, lorsque la sonde est située en regard d'une zone réputée sans défaut, la tension de sortie de la voie (30) soit nulle.

15. Dispositif selon la revendication 14, caractérisé par le fait que le moyen de mémorisation comprend : un détecteur de signe (70), une horloge (72), un compteur-décompteur (74) ayant une entrée de comptage (75) et une entrée de décomptage (76), ainsi qu'une sortie de données (77), un commutateur (78) ayant une entrée (79) reliée à l'horloge (72) et deux sorties (81, 82) reliées aux entrées (75, 76) du compteur (74) et une entrée de commande (83) reliée au détecteur de signe (70), un convertisseur numérique-analogique (86) ayant une entrée reliée à la sortie de données (77) du compteur (74) et une sortie (88) reliée à l'entrée négative (64) du comparateur (62).

16. Dispositif selon la revendication 9, caractérisé par le fait que chaque voie d'échantillonnage et de maintien (30/1...) comprend un premier échantillonneur-bloqueur (90) apte à effectuer rapidement l'échantillonnage mais seulement apte à maintenir l'échantillon pendant une durée limitée, et un second échantillonneur-bloqueur (92) relié au premier et apte à ré-échantillonner lentement, avec un retard fixe, le signal délivré par le premier mais apte à maintenir ce signal ré-échantillonné pendant une durée longue.

**Patentansprüche**

1. Verfahren zum prüfen von Teilen mit Impuls-Wirbelströmen, bei dem: man eine Sonde (14, 16), die in der Nähe des zu prüfenden Teils (27) angeordnet ist, mit wenigstens einem Anregungsimpuls versorgt, der eine vorgegebene Form und Dauer hat, man auf der Sonde (14, 16) eine entsprechenden Meßimpuls abgreift, man Momentwerte von diesem Meßimpuls bildet und die Amplitude dieser erhaltenen Momentwerte festhält, wobei das Verfahren gekennzeichnet ist durch die Tatsache, daß: man einen ersten Momentwert des Meßimpulses zu einem ersten Zeitpunkt aufnimmt, der eine kurze Verzögung bezüglich des Impulsbeginns darstellt, und man diesen ersten Momentwert festhält, man einen zweiten Momentwert des Meßimpulses zu einem zweiten Zeitpunkt aufnimmt, der eine lange Verzögerung bezüglich de Impulsbeginns darstellt, und man diesen zweiten Momentwert festhält, man auf einer ebenen Anzeigevorrichtung einen punkt anzeigt, der eine erste Koordinate auf einer ersten Achse (OX1) der Ebene gleich der Amplitude des ersten festgehaltenen Meßwerts besitzt und eine zweite Koordinate auf einer zweiten Achse (OX2) der Ebene gleich der Amplitude des zweiten festgehaltenen Meßwerts besitzt, wobei die Position dieses Punktes den Zustand des Teils angibt.

2. Verfahren nach Anspruch 1, gekennzeichnet durch die Tatsache, daß man die Sonde (14, 16) und das Teil (17) gegenseitig verschiebt und man den Anregungsimpuls wieder anlegt, wobei die Anordnung der erhaltenen Punkte eine kurve kennzeichnen, deren Amplitude und Phase ein Bild des Teils entlang des Verschiebungsbereichs ergeben.

3. Verfahren nach Anspruch 1 oder 2, gekennzeichnet durch die Tatsache, daß es die folgenden Schritte aufweist: man nimmt Momentwerte von jedem Meßimpuls in mehreren Intervallpaaren mit jeweils kurzer und langer Verzögerung auf, um mehrere festgehaltene Momentwertamplitudenpaare zu erhalten, man stellt jedes dieser paare durch einen punkt dar, um ebensoviele punkte und ebensoviele kurven zu erhalten.

4. Verfahren nach Anspruch 3, gekennzeichnet durch die Tatsache, daß es außerdem eine Bearbeitung zum Eliminieren eines unerwünschten Parameters umfaßt, wobei diese Bearbeitung darin besteht, die Amplitude und/oder Phase einer ersten Kurve, die einem ersten Amplitudenpaar entspricht, zu modifizieren und/oder die Amplitude und/oder Phase einer zweiten Kurve, die einem zweiten Amplitudenpaar entspricht, zu modifizieren, um zwei in Phase und Amplitude analoge Kurven in einem dem unerwünschten Parameter entsprechenden Bereich zu erhalten, und daß man die modifizierten Amplituden des ersten Paars jeweils von den modifizierten Amplituden des zweiten Paars abzieht, um eine neue, von dem unerwünschten Parameter befreite Kurve zu erhalten.

5. Verfahren nach Anspruch 1, gekennzeichnet durch die Tatsache, daß der Vorgang von Momentwertaufnahme-Festhalten auf einen zuvor ins Gleichgewicht gebrachten Impuls stattfindet, der durch die folgenden Gleichgewichtsvorgänge erhalten wird: man nimmt ein für alle Mal den Meßimpuls auf, den die Sonde (14, 16) erzeugt, wenn sie sich gegenüber einem als fehlerfrei angesehenen Bereich befindet, wobei dieser Impuls einen Referenzimpuls bildet, und man stellt diesen Referenzimpuls synchron mit dem augenblicklichen Meßimpuls wieder her, wenn die Sonde (14, 16) gegenüber einem zu prüfenden Bereich ist, und man zieht von dem augenblicklichen Meßimpuls den so wiederhergestellten Referenzimpuls ab.

6. Verfahren nach Anspruch 5, gekennzeichnet durch die Tatsache, daß man den Referenzimpuls digital durch Analog/Digitalwandlung und anschließendes Schreiben in einen Speicher (46) aufnimmt und daß man den Referenzimpuls durch Lesen des Speichers (46) und Digital/Analogwandlung wiederherstellt.

7. Verfahren nach Anspruch 1, gekennzeichnet durch die Tatsache, daß man den Meßvorgang für die Änderungen der festgehaltenen Momentwertamplituden auf ein kompensiertes Meßsignal durchführt, das durch folgende Kompensationsschritte erhalten wird: man nimmt ein für alle Mal die festgehaltene Momentwertamplitude auf, die die Sonde (14, 16) erzeugt, wenn sie sich gegenüber einem als fehlerfrei angesehenen Bereich befindet, wobei diese Amplitude ein Kompensationssignal bildet, man zieht von dem augenblicklichen Meßsignal, das man erhält, wenn die Sonde vor dem zu prüfenden bereich ist, das Kompensationssignal ab.

8. Verfahren nach Anspruch 7, gekennzeichnet durch die Tatsache, daß der Aufzeichnungsvorgang für das Kompensationssignal digital durchgeführt wird und folgende Schritte umfaßt: man nimmt der Momentwert des Meßsignals auf, wenn die Sonde (14, 16) gegenüber einem als fehlerfrei angesehenen Bereich ist, man stellt das Vorzeichen des erhaltenen Momentwerts fest, man ordnet das Herauf- oder das Herunterzählen von Taktimpulsen in einem Zähler entsprechend dem Vorzeichen an, man wandelt das erhaltene Zählergebnis analog um, man zieht von dem Meßsignal das umgewandelte, analoge Signal ab, man hält das Herauf-Herunterzählen an, sobald das nach der Subtraktion erhaltene Signal Null ist, wobei das endgültige Zählergebnis den aufgenommenen digitalen Wert des Kompensationssignals darstellt.

9. Vorrichtung zum prüfen mit Impuls-Wirbelströmen, die das Verfahren nach Anspruch 1 ausführt, wobei diese Vorrichtung umfaßt: eine Sonde (14, 16), die gegenüber einem zu prüfenden Teil (17) angeordnet ist, einen Generator (12), der geeignet ist, einen Impuls von bestimmter Form und Dauer auszusenden, wobei dieser Impuls an die Sonde (14, 16) angelegt wird, wenigstens zwei Momentwert-Festhaltezweige (30/1, 30/2), die einen mit der Sonde (16) verbundenen Eingang besitzen, wobei diese Zweige geeignet sind, einen Meßimpuls zu verschiedenen, auf eine Verzögerung, die von dem Beginn des von der Sonde (14, 16) erzeugten Meßimpulses gezählt wird, bezogenen Zeitpunkten abzutasten und die abgetastete Amplitude festzuhalten, wobei diese Vorrichtung gekennzeichnet ist durch die Tatsache, daß sie eine Anzeigevorrichtung für einen Punkt besitzt, der als erste Koordinate auf einer ersten Achse (OX1) eine der festgehaltenen Momentwertamplituden (U1), die mit einer kurzen Abtastverzögerung (t1) erhalten wurde, besitzt und als zweite Koordinate auf einer zweiten Achse (OX2) eine der festgehaltenen Momentwertamplituden (U2), die mit einer langen Abtastverzbgerung (t2) erhalten wurde, besitzt.

10. Vorrichtung nach Anspruch 9, gekennzeichnet durch die Tatsache, daß sie außerdem Vorrichtungen zum Gegeneinander-Verschieben der Sonde (14, 16) und des Teils besitzt, wobei der Generator (12) dann eine Folge von wiederkehrenden Impulsen aussendet, die eine bestimmte Wiederholfrequenz besitzen, die von der Verschiebungsgeschwindigkeit bestimmt wird, wobei der angezeigte punkt dann eine Kurve in der Anzeigeebene beschreibt, wobei die Amplitude (A) und die Phase (φ) dieser Kurve Informationen über Fehler in dem Teil (17) entlang des Verschiebungsbereichs geben.

11. Vorrichtung nach Anspruch 10, gekennzeichnet durch die Tatsache, daß sie Ponderatoren (P1, P2) und/oder einen Rotator (Rot1) umfaßt, um die Amplitude und/oder die Phase einer ersten Kurve, die einem ersten paar von festgehaltenen Momentwertamplituden (U1, U2) entspricht, zu modifizieren, und daß sie Ponderatoren (P3, P4) und/oder einen Rotator (Rot2) umfaßt, um die Amplitude und/oder die Phase einer zweiten Kurve, die einem zweiten paar von festgehaltenen Momentwertamplituden (U3, U4) entspricht, zu modifizieren, um zwei in Amplitude und Phase bezüglich einem unerwünschten Parameter analoge Kurven zu erhalten, und zwei Subtraktoren (S1, S2) umfaßt, um paarweise die Komponenten der beiden Vektoren, deren Komponenten so modifiziert wurden, voneinander abzuziehen, um eine neue, von dem unerwünschten parameter befreite Kurve zu erhalten.

12. Vorrichtung nach Anspruch 9, gekennzeichnet durch die Tatsache, daß sie außerdem Gleichgewichtsvorrichtungen umfaßt, die eine Vorrichtung zum Aufzeichnen des Meßsignals, das von der Sonde (14, 16) erzeugt wird, wenn diese sich vor einem als fehlerfrei angesehenen Bereich befindet, einen Addierer (34) mit zwei Eingängen, von denen der eine negativ (35) ist und geeignet ist, mit dem Ausgang der Aufzeichnungsvorrichtung verbunden zu werden, und der andere positiv (36) ist und mit der Sonde (14, 16) verbunden ist, wenn diese sich gegenüber einem zu prüfenden Bereich befindet, und eine Vorrichtung zum Steuern der Aufzeichnungsvorrichtung synchron mit dem augenblicklichen Meßimpuls umfassen.

13. Vorrichtung nach Anspruch 12, gekennzeichnet durch die Tatsache, daß die Aufzeichnungsvorrichtung umfaßt: einen Abtaster (40) mit einem Signaleingang (41), der mit der Sonde verbunden ist, und einem Steuerungseingang (42), der ein Gleichgewichtsbefehlssignal erhält, und einem Ausgang (43), einen mit dem Ausgang (43) des Abtasters verbundenen Analog/Digitalwandler (44), einen Speicher (46) mit einem Dateneingang und einem Datenausgang (47, 48) und einem AdresseIngangIngang (49), wobei der Dateneingang (47) mit dem Analog/Digitalwandler (44) verbunden ist, einen Zähler (50) mit einem Digitalausgang (51), der mit dem Adresseingang (49) des Speichers (46) verbunden ist, einen Digital/Analogwandler (54), der mit dem Datenausgang (48) des Speichers (46) verbunden ist, einen Taktgeber (56), der den Abtaster (40) und den Zähler (50) steuert, einen zwischen dem Taktgeber (56) und dem Zähler angeordneten Schaltkreis (57), damit das von dem negativen Eingang (35) des Addierers (34) erhaltene, wiederhergestellte Signal synchron mit dem augenblicklichen, von dem positiven Eingang (36) des Addierers (34) erhaltenen Meßimpuls ist.

14. Vorrichtung nach Anspruch 9, gekennzeichnet durch die Tatsache, daß sie einen Kompensationsschaltkreis (60) umfaßt, der vor jedem Abtast (30)- und Festhaltezweig (30/1...) angeordnet ist, wobei dieser Schaltkreis (60) einen Addierer (62) umfaßt mit zwei Eingängen, einem positiven (63) und einem negativen (64), eine Speichervorrichtung MEM für eine mit dem negativen Eingang (64) des Addierers (62) verbundene Spannung, wobei diese Spannung derart ist, daß, wenn sich die Sonde gegenüber einem als fehlerfrei angesehenen Bereich befindet, die Ausgangsspannung des Zweigs (30) Null ist.

15. Vorrichtung nach Anspruch 14, gekennzeichnet durch die Tatsache, daß die Speichervorrichtung umfaßt: einen Vorzeichendetektor (70), einen Taktgeber (72), einen Herauf-Herunterzähler (74) mit einem Heraufzähleïngang (75) und einem Herunterzähleingang (76) und mit einem Datenausgang (77), einen Kommutator (78) mit einem mit dem Taktgeber (72) verbundenen eingang (79) und zwei Ausgängen (81, 82), die mit den Eingängen (75, 76) des Zählers (74) verbunden sind, und einem Steuerungseingang (83), der mit dem Vorzeichenden tektor (70) verbunden ist, einen Digital/Analogwandler (86) mit einem mit dem Datenausgang (77) des Zählers (74) verbundenen Eingang und einem mit dem negativen Eingang (64) des Komparators (62) verbundenen Ausgang (88).

16. Vorrichtung nach Anspruch 9, gekennzeichnet durch die Tatsache, daß jeder Abtast- und Festhaltezweig (30/1...) einen ersten Abtast-Blockierer (90), der geeignet ist, die Abtastung schnell durchzuführen aber den Momentwert nur während einer begrenzten Dauer festzuhalten, und einen zweiten Abtast-Blockierer (92) umfaßt, der mit dem ersten verbunden ist und geeignet ist, langsam mit einer festen Verzögerung das von dem ersten erzeugte Signal abzutasten aber dieses wiederabgetastete Signal über eine lange Dauer festzuhalten.

**Claims**

1. Process for controlling parts by pulsed eddy currents, in which: a probe (14, 16) located in the vicinity of the part to be centered (17) is supplied with at least one exciting pulse having given shape and duration, a corresponding measwing pulse is taken on the probe (14, 16), said measuring pulse is sampled and the amplitude of the samples obtained is held, said process being characterized in that: a first sample of the measuring pulse is taken at a first instant having a short lag compared with the start of the pulse and said first sample is held, a second sample of the measuring pulse is taken at a second instant having a longer lag compared with the start of the pulse and said second sample is held, on a planar display means a display takes place of a point having a first coordinate on a first axis (OX1) of the plane equal to the amplitude of the first sample held and having a second coordinate on a second axis (OX2) of the plane equal to the amplitude of the second sample held, the position of said point revealing the state of the part.

2. Process according to claim 1, characterized in that reciprocal displacement takes place between the probe (14, 16) and the part (17), the exciting pulse is reemitted, the corresponding point is displayed for each pulse, whereby all the points obtained provide a line or outline, whose amplitude and phase give an image of the part along the displacement zone.

3. Process according to claims 1 and 2, characterized in that it comprises sampling each measuring pulse in several pairs of instants respectively with short and long lags, in order to obtain several pairs of sampled and held amplitudes and each of these pairs is represented by a point in order to obtain the same number of points and the same number of lines.

4. Process according to claim 3, characterized in that it also comprises the elimination of an undesirable parameter, which consists of modifying the amplitude and/or phase of a first line corresponding to a first pair of amplitudes and/or modifying the amplitude and/or phase of a second line corresponding to a second pair of amplitudes to obtain two lines which are identical in phase and amplitude in an area corresponding to the desirable parameter and the modified amplitudes of the first pair are subtracted from the modified amplitudes of the second pair to obtain a new line free from the undesired parameter.

5. Process according to claim 1, characterized in that the sample and hold operation takes place on a previously balanced pulse obtained by the following balancing operations: once and for all the measuring pulse supplied by the probe (14, 16) when it faces an area considered to be defect-free is recorded, said pulse constituting a reference pulse and said reference pulse is restored in synchronous manner with the measuring pulse obtained when the probe (14, 16) faces an area to be inspected and the thus restored reference pulse is subtracted from the measuring pulse.

6. Process according to claim 5, characterized in that digital registration takes place of the reference pulse by analog-digital conversion and then reading into a memory (46) and the reference pulse is restored by reading the said memory (46) and digital-analog conversion.

7. Process according to claim 1, characterized in that the opration of measuring the variations of the sampled and held amplitude is carried out on a compensated measuring signal obtained by recording once and for all the poled and held amplitude obtained when the probe (14, 16) faces an area considered to be defect-free, said amplitude constituting a compensating signal and the compensating signal is subtracted from the measurement signal obtained when the probe is in front of an area to be inspected.

8. Process according to claim 7, characterized in that the operation of recording a compensating signal takes place digitally and comprises the following operations: the measuring signal is sampled when the probe ( 14, 16 ) faces an area considered to be defect-free, the sign of the sample obtained is detected, the counting up or down of the clock pulses in a counter is controlled as a function of said sign, the result of the count undergoes analog conversion, the converted analog signal is subtracted from the measurement signal, counting up and down is stopped when the signal obtained after subtraction is zero, the final result of the count obtained constituting the recorded digital value of the compensating signal.

9. Pulsed eddy curren control apparatus performing the process according to claim 1 and comprising: a probe (14, 16) positioned facing a part to be inspected (17), a generator ( 12 ) emit at least one pulse of predetermined shape and duration, said pulse being applied to probe (14, 16), at least two sample and hold channels (30/1, 30/2) having an imput connected to probe (16), said channels sample a measuring pulse at different instants designated by a time lag counted from the start of the measuring pulse supplied by the probe (14, 16) and holding the sampled amplitude, said apparatus being characterized in that it comprises a means for displaying a point having for the first coordinate on a first axis (OX1) one of the sampled and held amplitudes (U1) obtained with a short sampling lag (t1) and as the second coordinate along a second axis (OX2) a second sampled and held amplitude (U2) obtained with a long sampling lag (t2).

10. Apparatus according to claim 9, characterized in that it also comprises means for displacing the probe (14, 16) and the part (17) with respect to one another, the generator ( 12 ) then emitting a sequence of recurring pulses having a recurrence period determined by the displacement speed, the displayed point then describing a line in the display plane, the amplitude (A) and phase (∅) of said line giving information on the defects of the part (17) along the displacement zone.

11. Apparatus according to claim 10, characterized in that it comprises weighting means (P1, P2) and/or a rotator (Rot1) for modifying the amplitude and/or phase of a first line corresponding to a first pair of sampled and held amplitudes (U1, U2) and weighting means (P3, P4) and/or a rotator (Rot2) for modifying the amplitude and/or the phase of a second line corresponding to a second pair of sampled and held amplitudes (U3, U4) for obtaining two lines which are identical in amplitude and phase relative to an undesired parameter and subtractors (S1, S2) for subtracting pairwise the components of two vectors, whose components have thus been modified to obtain a new line free from the undesired parameter.

12. Apparatus according to claim 9, characterized in that it also comprises balancing means having a device for recording the measuring signal supplied by the probe (14, 16) when the latter is in front of an area considered to be defect-free, an adder (34) with two inputs, the negative input ( 35 ) being connectable to the output of the recording device and the other positive input (36) being connected to the probe (14, 16) when the latter faces an area to be inepected and a means for controlling the recording device in synchronism with the measuring pulse.

13. Apparatus according to claim 12, characterized in that the recording device comprises: a sample and hold circuit ( 40 ) having a signal input (41) connected to the probe and a control input (42) receiving a balancing control signal and an output (43), an analog-digital converter (44) connected to the output (43) of the sample and hold circuit, a memory (46) having a data input and output (47, 48) and an addressing input (49), the data input (47) being connected to the analog-digital converter (44), a counter (50) having a digital output (51) connected to the addressing input (49) of the memory (46), a digital-analog converter (54) connected to the data output (48) of memory (46), a clock (56) controlling the sample and hold circuit (40) and counter (50), a circuit (57) located between clock (56) and counter (50), so that the restored signal received by the negative input (35) of adder (34) is synchronous with the measuring pulse received by the positive input (36) of adder (34).

14. Apparatus according to claim 9, characterized in that it comprises a compensating circuit (60) placed in front of each sample and hold channel (30), said circuit (60) incorporating an adder (62) with two inputs, the positive input being (63) and the negative input (64), as well as a means MEM for storing a voltage connected to the negative input (64) of adder (62), said voltage being such that when the probe is located in front of an area considered to be defect-free, the output voltage of channel (30) is is zero.

15. Apparatus according to claim 14, characterized in that the storage means comprises : a sign detector (70), a clock (72), a reversible counter (74) having a counting up input (75) and a counting down input (76), as well as a data output (77), a switch (78) having an input (79) connected to clock (72) and two outputs (81,82) connected to the inputs (75,76) of counter (74) and a control input (83) connected to the sign detector (70), a digital-analog converter (86) having an input connected to the data output (77) of counter (74) and an output (88) connected to the negative input (64) of comparator (62).

16. Apparatus according to claim 9, characterized in that each sample and hold channel (30/1, etc.) comprises a first sample and hold circuit (90) able to rapidly carry out sampling, but only able to hold the sample for a short time, and a second sample and hold circuit (92) connected to the first and able to slowly resample, with a fixed lag, the signal supplied by the first circuit, but able to hold said resampled signal for a long time.

FIG. 1

FIG. 2

FIG. 3

FIG. 4

FIG. 5

16

FIG. 6

FIG. 7

FIG. 8

FIG.9

FIG. 10

FIG. 11

FIG. 12

FIG. 13